# FASCICULE DE BREVET EUROPEEN

(11) **EP 3 112 301 B1**
(45) Date de publication et mention de la délivrance du brevet: **11.04.2018**
(21) Numéro de dépôt: 16177063.1
(22) Date de dépôt: 30.06.2016
(51) Int. Cl.: B65G 69/26, B01F 13/10

(54) **INSTALLATION DESTINÉE AU TRANSFERT DE RÉCIPIENTS POUVANT CONTENIR UNE MATIÈRE PULVÉRULENTE**
ANORDNUNG ZUM TRANSFER VON BEHÄLTERN, DIE EINEN PULVERFÖRMIGEN STOFF ENTHALTEN KÖNNEN
INSTALLATION FOR TRANSFERRING CONTAINERS THAT MAY CONTAIN A POWDERY MATERIAL

(30) Priorité: 30.06.2015 FR 1556171
(43) Date de publication de la demande: 04.01.2017
(73) Titulaire: Sofraden Industrie, 42100 Saint Etienne (FR)
(72) Inventeur: PLACE, Delphine, 42170 SAINT JUST SAINT RAMBERT (FR); BOISSIER, Xavier, 42330 SAINT-GALMIER (FR); SOUBEYRAND, Frédéric, 42100 SAINT ETIENNE (FR)
(74) Mandataire: Delorme, Nicolas

(56) Documents cités:
- EP-A2- 1 803 679
- DE-C- 460 514
- JP-A- H01 246 483
- NL-A- 8 700 462
- US-A- 2 441 774

## Description

La présente invention concerne une installation destinée au chargement et au transfert de récipients contenant une matière pulvérulente.

Les usines de pulvérulents existantes sont classiquement construites suivant deux types possibles d'architectures, à savoir une architecture verticale, qui permet de transférer par gravité les produits pulvérulents d'un poste à un autre, et une architecture horizontale, qui présente l'avantage d'être plus flexible et facile à implanter que l'architecture verticale.

Cependant, une usine de pulvérulents à architecture horizontale nécessite des systèmes de convoyage : transferts pneumatiques, convoyeurs à vis, convoyeurs à bandes, etc.

Tous ces systèmes de convoyage ont l'inconvénient de poser des problèmes de contaminations croisées produits lors du changement de recettes.

En outre, l'utilisation des systèmes de convoyage peut pénaliser le temps de cycle de l'installation de pulvérulents, donc sa productivité. DE 460 514 décrit une installation selon le préambule de la revendication 1. La présente invention vise à pallier tout ou partie de ces inconvénients en proposant une installation destinée au chargement et au transfert de récipients pouvant contenir une matière pulvérulente, évitant les problèmes de contaminations croisées lors de changement de recettes, et améliorant la productivité, tout en restant simple à implanter.

A cet effet, la présente invention a pour objet une installation destinée au transfert de récipients pouvant contenir une matière pulvérulente, caractérisée en ce que l'installation comprend
un dispositif de distribution rotatif ayant une structure de support destinée à supporter plusieurs récipients et un axe de rotation autour duquel la structure de support est mobile en rotation, de sorte qu'une rotation de la structure de support d'une fraction de tour prédéterminée autour de l'axe de rotation provoque un déplacement des récipients d'un emplacement prédéterminé à un autre selon une trajectoire en arc-de-cercle autour de l'axe de rotation, et
un dispositif d'élévation configuré pour élever un des récipients parmi la pluralité de récipients depuis un emplacement bas correspondant à l'un desdits emplacements prédéterminés jusqu'à un emplacement haut situé en hauteur par rapport à cet emplacement bas, le dispositif d'élévation comprenant une rampe inclinée et des moyens d'entraînement configurés pour déplacer le récipient en translation le long de la rampe depuis l'emplacement bas jusqu'à l'emplacement haut, et dans laquelle la structure de support comprend une pluralité d'unités de support ayant chacune des moyens de support configurés pour supporter un des récipients, chaque unité de support délimitant une ouverture de dégagement radial permettant aux moyens d'entraînement de déplacer le récipient le long de la rampe directement depuis l'unité de support. Ainsi, l'installation selon l'invention permet le transfert d'un récipient d'un point de chargement à un autre, jusqu'à un point de déchargement, ce qui permet d'éviter toute contamination, y compris lors d'un changement de recette. En effet, un seul récipient, à l'intérieur duquel sont disposés les différents ingrédients de la recette aux différents points de chargement, est utilisé.

De plus, le dispositif de distribution rotatif, en permettant de déplacer simultanément plusieurs récipients d'un point de chargement successif à un autre, chaque récipient étant à un point de chargement distinct des autres récipients, permet d'améliorer le temps de cycle, donc la productivité.

On note également que le déplacement des récipients est une combinaison d'une rotation par le dispositif de distribution rotatif, puis d'une translation par le dispositif d'élévation. Les récipients ne sont soumis qu'à ces deux mouvements ; il n'y a pas de déplacement intermédiaire entre cette rotation et cette translation.

Selon un mode de réalisation préféré, la structure de support comprend une pluralité d'unités de support ayant chacune des moyens de support configurés pour supporter un des récipients, de sorte que ce récipient repose de manière stable et par gravité sur l'unité de support, et dans laquelle le dispositif d'élévation comprend des moyens d'entraînement configurés pour soulever le récipient, depuis l'emplacement bas jusqu'à l'emplacement haut, puis ramener le récipient, depuis l'emplacement haut jusqu'à l'emplacement bas, en posant de nouveau le récipient sur l'unité de support.

Ainsi, comme le récipient est simplement posé sur la structure de support, et repose de façon stable sur celle-ci sous l'effet de son propre poids, son déplacement depuis l'emplacement bas jusqu'à l'emplacement haut consiste uniquement en une action de soulèvement par les moyens d'entraînement du dispositif d'élévation. De même, à son retour à l'emplacement bas, le récipient est simplement reposé sur la structure de support.

Il n'y a pas de déplacement ou action sur le récipient autre que cette élévation à partir du moment où l'unité de support est à l'emplacement bas.

L'installation est ainsi simple à mettre en oeuvre et le temps de cycle, donc la productivité, est améliorée.

Selon un mode de réalisation préféré, les moyens d'entraînement comprennent un dispositif de préhension mobile en translation le long de la rampe inclinée et destiné à entraîner avec lui le récipient en translation le long de la rampe inclinée, les moyens de support comprenant des organes de positionnement configurés pour pré-positionner le récipient sur l'unité de support dans une position de préhension telle que, lorsque l'unité de support est à l'emplacement bas, le récipient présente une partie de préhension qui s'étend sur la trajectoire du dispositif de préhension.

Cela offre une solution simple et rapide pour élever le récipient de l'emplacement bas à l'emplacement haut.

Selon un mode de réalisation préféré, le dispositif de préhension comprend des moyens de préhension configurés pour coopérer avec la partie de préhension de manière à faire reposer le récipient contre un organe d'appui du dispositif de préhension sous l'effet de la gravité quand le récipient est déplacé le long de la rampe inclinée.

Ainsi, le récipient repose de façon stable sur le dispositif d'élévation sous l'effet de son propre poids, ce qui rend l'installation simple à mettre en oeuvre.

Selon un mode de réalisation préféré, les organes de positionnement délimitent des encoches sensiblement en forme de V, et comprennent une partie fixe formant un premier côté de l'encoche en V, et une partie mobile par rapport à la partie fixe entre une position déployée, dans laquelle la partie mobile forme avec la partie fixe l'encoche en forme de V, et une position escamotée dans laquelle la partie mobile ouvre l'encoche en V.

Cela permet de faciliter l'extraction ou la mise en place du récipient, et donc d'améliorer la fiabilité et le temps de cycle. L'installation offre ainsi une productivité améliorée.

Selon un mode de réalisation préféré, les récipients comprennent deux barres d'appui coaxiales destinées à reposer sur les moyens de support, les deux barres d'appui étant désaxées par rapport au centre de gravité du récipient de sorte que le récipient tend à pivoter autour des deux barres d'appui coaxiales vers l'axe de rotation central de la structure de support quand les barres d'appui sont supportées par les moyens de support, et dans laquelle chaque récipient comprend une butée destinée à venir en appui contre une surface d'appui des moyens de support pour arrêter le basculement du récipient et immobiliser ce dernier sur les moyens de support.

Ces caractéristiques permettent aux récipients de reposer de façon stable sur la structure de support, sans risque de basculement vers l'ouverture de dégagement radial.

Selon un mode de réalisation préféré, le dispositif de distribution rotatif comprend une toiture destinée à s'étendre au-dessus de la structure de support et des récipients, et dans laquelle la toiture comprend une pluralité de trous d'aspiration agencés pour être au-dessus de la trajectoire des récipients, l'installation comprenant un dispositif d'aspiration sélectif configuré pour aspirer uniquement au-niveau du ou des trous d'aspiration sous lesquels passe un récipient.

Cela limite le risque de contamination d'un récipient à un autre, avec un minime de coûts, ce qui améliore le rendement de l'installation.

Selon un mode de réalisation préféré, le dispositif de distribution rotatif comprend une toiture destinée à s'étendre au-dessus de la structure de support et des récipients, et dans laquelle la toiture délimite, en regard du dispositif d'élévation, une ouverture de passage permettant l'élévation du récipient depuis l'emplacement bas jusqu'à l'emplacement haut à travers la toiture, l'installation comprenant un capot amovible posé sur la toiture et obturant au moins en partie ladite ouverture, le capot étant configuré pour être entraîné par le récipient en obturant une ouverture supérieure de ce récipient quand celui-ci est élevé de l'emplacement bas à l'emplacement haut, et être posé de nouveau sur la toiture en travers de l'ouverture de passage du fait du retour du récipient de l'emplacement haut jusqu'à l'emplacement bas.

Ces caractéristiques offrent l'avantage de limiter tout risque de contamination lors de l'élévation des récipients, avec un minimum de coûts, ce qui améliore le rendement de l'installation.

Selon un mode de réalisation préféré, l'installation comprend des moyens de pesage adaptés pour peser au moins un des récipients supportés par la structure de support.

Cette caractéristique permet un contrôle des quantités de matière pulvérulente contenues dans les récipients, ce qui permet de détecter d'éventuelles pertes de matière pulvérulente susceptible de contaminer d'autres récipients, et de doser précisément les ingrédients pour améliorer le rendement.

D'autres caractéristiques et avantages de la présente invention ressortiront clairement de la description détaillée ci-après d'un mode de réalisation, donné à titre d'exemple non limitatif, en référence aux dessins annexés dans lesquels :
- La figure 1 est une vue de dessus d'une installation selon un mode de réalisation de l'invention,
- La figure 2 est une vue en perspective et de côté d'un dispositif de distribution rotatif d'une installation selon un mode de réalisation de l'invention, dont une toiture est représentée en transparence,
- La figure 3 est une vue en perspective et de côté d'un dispositif d'élévation d'une installation selon un mode de réalisation de l'invention,
- La figure 4 est une vue en perspective et de côté d'un récipient d'une installation selon un mode de réalisation de l'invention, à l'emplacement bas,
- La figure 5 est une vue de côté et en perspective d'un détail de la figure 3,
- La figure 6 est une vue en perspective et de côté du dispositif d'aspiration sélectif et de la toiture du dispositif de distribution rotatif d'une installation selon un mode de réalisation de l'invention,
- La figure 7 est une vue en perspective d'un capot d'une installation selon un mode de réalisation de l'invention,
- La figure 8 est une vue en perspective d'un dispositif de pesage d'une installation selon un mode de réalisation de l'invention,
- La figure 9 est une vue en perspective et par transparence d'un dispositif d'aspiration sélectif d'une installation selon un mode de réalisation de l'invention.

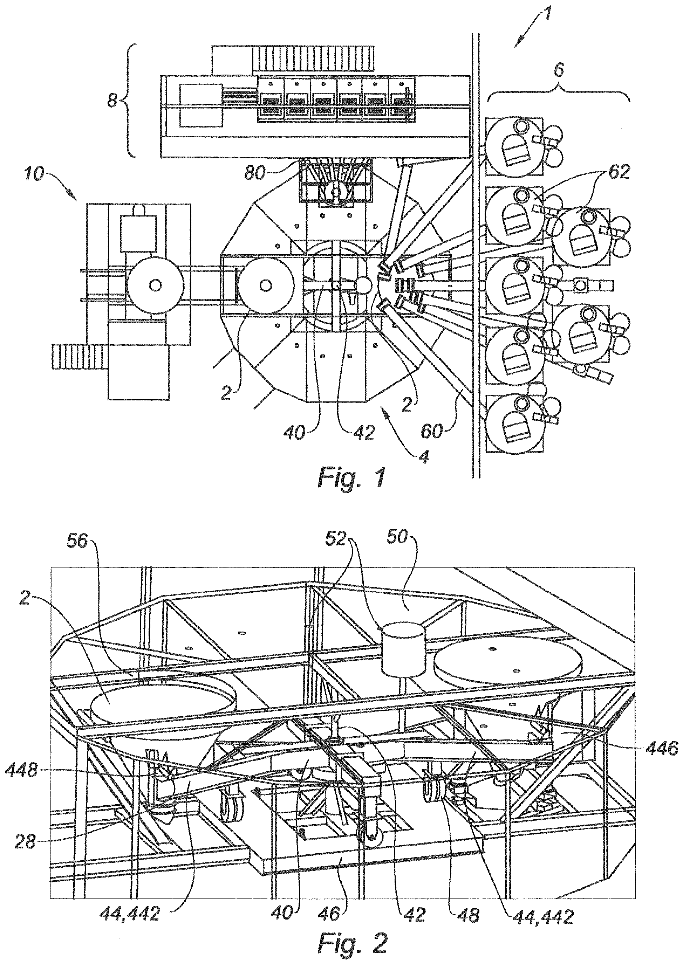

La figure 1 montre une installation 1 selon un mode de réalisation de l'invention. L'installation 1 est destinée au chargement et au transfert de récipients 2 pouvant contenir une matière pulvérulente.

L'installation 1 comprend ici, en son centre, un dispositif de distribution rotatif 4, permettant de déplacer simultanément une pluralité de récipients 2, chaque récipient 2 étant déplacé d'un emplacement prédéterminé à un autre. A chaque emplacement prédéterminé est accomplie une tâche de travail spécifique, comme par exemple le chargement du récipient avec des ingrédients d'une recette ou son évacuation.

L'installation 1 comprend également un premier dispositif de stockage 6, comprenant ici un ou plusieurs silos 62 de stockage, chaque silo 6 de stockage étant destiné à contenir une matière pulvérulente, correspondant à un ingrédient d'une recette. Le dispositif 6 de stockage comprend des moyens d'amenée, comme des vis de convoyage 60, permettant de transporter la matière pulvérulente jusqu'au dessus d'un emplacement de chargement du dispositif de distribution rotatif 4, afin que la matière pulvérulente tombe dans le récipient 2 qui a été auparavant déplacé par le dispositif de distribution rotatif jusqu'à ce premier emplacement de chargement.

L'installation 1 peut également comprendre un dispositif de stockage d'additif 8, destiné à stocker un ou des additifs nécessaires à la recette, le dispositif de stockage d'additif 8 ayant des moyens d'amenée, comme des vis de dosage 80, pour transporter le ou les additifs au-dessus d'un deuxième emplacement de chargement du dispositif de distribution rotatif 4, afin que ce ou ces additifs tombent dans le récipient 2 qui a été auparavant déplacé par le dispositif de distribution rotatif 4 jusqu'à ce deuxième emplacement de chargement.

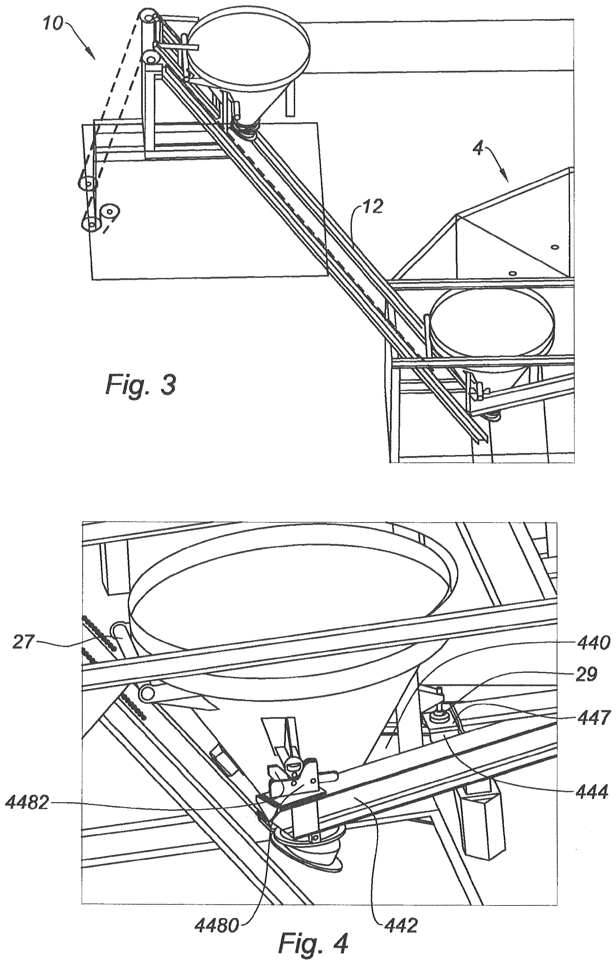

L'installation 1 comprend en outre un dispositif d'élévation 10, du type skip, permettant d'élever un récipient 2 depuis un emplacement bas (récipient 2 à droite sur la figure 3) jusqu'à un emplacement haut (récipient 2 à gauche sur la figure 3), l'emplacement haut étant situé en hauteur par rapport à l'emplacement bas, c'est-à-dire à un niveau supérieur à celui l'emplacement bas. L'emplacement haut peut être un emplacement de déchargement, où le récipient 2 est destiné à être déchargé de la ou des matières pulvérulentes qu'il contient, par exemple pour remplir un mélangeur situé sous l'emplacement haut. L'emplacement bas correspond à l'un des emplacements prédéterminés auquel le dispositif de distribution rotatif 4 peut amener les récipients 2.

Ainsi, le dispositif de distribution rotatif 4 permet d'amener successivement les récipients 2 depuis un ou plusieurs emplacements de chargement consécutifs jusqu'à l'emplacement bas à partir duquel les récipients sont élevés jusqu'à l'emplacement haut par le dispositif d'élévation.

L'installation 1 peut comprendre les récipients 2. Les récipients 2 peuvent être des trémies. Les récipients 2 comprennent une paroi 20 latérale délimitant un volume de chargement destiné à contenir une matière pulvérulente. Cette paroi 20 latérale délimite une ouverture 22 supérieure, permettant l'introduction de la matière pulvérulente dans le volume de chargement, et une ouverture 24 inférieure, permettant le déchargement préférentiellement par gravité de la matière pulvérulente contenue dans le volume de chargement. Le récipient 2 comprend une trappe 26, mobile entre une position d'obturation dans laquelle la trappe 26 obture l'ouverture 24 inférieure et une position de déchargement dans laquelle la trappe 26 libère un passage à travers l'ouverture 24 inférieure pour permettre de décharger la matière pulvérulente. La paroi 20 latérale peut avoir une forme sensiblement conique, dont le sommet est du côté de l'ouverture 24 inférieure.

Comme illustré sur la figure 2, le dispositif de distribution rotatif 4 comprend une structure 40 de support destinée à supporter plusieurs récipients 2 et un axe 42 de rotation autour duquel la structure 40 de support est mobile en rotation. L'axe 42 de rotation peut être agencé sensiblement au centre la structure 40 de support, celle-ci pouvant être sensiblement symétrique par rapport à cet axe 42 de rotation. Le dispositif de distribution rotatif 4 comprend des moyens d'entraînement, comme un actionneur, permettant d'entraîner en rotation la structure 40 de support autour de l'axe 42 de rotation. Comme illustré sur la figure 2, le dispositif de distribution rotatif 4 peut comprendre un bâti 46, à partir duquel s'étend l'axe 42 de rotation, et la structure 40 de support peut comprendre des moyens de roulement, par exemple des roues 48, lui permettant de rouler sur une piste du bâti 46 ou sur le sol afin de pivoter autour de l'axe 42 de rotation.

Pour supporter les récipients 2, la structure 40 de support comprend une pluralité d'unités 44 de support, par exemple deux selon l'exemple de la figure 2, chaque unité 44 de support étant destinée à supporter un des récipients 2.

Les unités 44 de support sont agencées autour de l'axe 42 de rotation, de préférence à équidistance de celui-ci. En d'autres termes, les unités 44 de support sont alignées en cercle autour de l'axe 42 de rotation. Les unités 44 de support peuvent en outre être réparties à intervalle d'angle régulier autour de l'axe 42 de rotation, si bien que la rotation de la structure 40 de support d'une fraction de tour prédéterminée, correspondant à cet intervalle d'angle, autour de l'axe 42 de rotation, provoque un déplacement des récipients 2 d'un emplacement prédéterminé à un autre selon une trajectoire en arc-de-cercle autour de l'axe 42 de rotation, chaque récipient 2 prenant la place d'un autre récipient 2. Ainsi, à chaque fraction de tour prédéterminée, les récipients 2 passent d'un poste de travail à un autre, ce qui permet de réaliser plusieurs tâches simultanément, comme le chargement d'un récipient 2 au niveau du premier emplacement de chargement et l'élévation d'un autre récipient 2 par le dispositif d'élévation à partir de l'emplacement bas (voir figure 1).

On notera que la structure 40 de support s'étend essentiellement dans un plan horizontal perpendiculaire à l'axe 42 de rotation vertical.

L'axe de symétrie des récipients 2 est, lorsque ces récipients reposent sur les unités 44 de support, sensiblement parallèle à l'axe 42 de rotation.

Comme visible sur la figure 4, chaque unité 44 de support comprend des moyens de support configurés pour supporter le récipient 2 de sorte que celui-ci repose de manière stable et par gravité seulement sur l'unité 44 de support.

Ainsi, les récipients 2 reposent sur les unités 44 de support et sont maintenus en place sur celles-ci sous l'effet de leur propre poids et de leur éventuel chargement. Il n'y pas de verrouillage en position du récipient 2 sur l'unité de support, ou autre mécanisme de maintien. Les récipients 2 en place sur les unités 44 de support sont donc prêts à être soulevés à partir de l'unité 44 de support, sans aucune action de préparation préalable. Leur mise en place, qui consiste simplement à les poser sur l'unité 44 de support, est également rapide à mettre en oeuvre.

Selon l'exemple des figures 2 et 4, les moyens de support peuvent délimiter un logement 440 de support destiné à recevoir le récipient 2, une partie du récipient 2 s'étendant à travers ce logement 440 de support.

Les moyens de support peuvent par exemple comprendre deux bras 442, par exemple agencés sensiblement en V, s'étendant ici à partir de l'axe 42 de rotation, et le cas échéant un bras de traverse 444 reliant les deux bras 442 en V, le récipient 2 étant destiné à prendre appui sur les deux bras 442 en V et le cas échéant sur le bras 444 de traverse. Le logement 440 correspond à l'intérieur du V, et est ici délimité par les deux bras 442 et le bras de traverse 444.

On remarquera que chaque unité 44 de support délimite une ouverture 446 de dégagement radial permettant au dispositif 10 d'élévation d'élever radialement le récipient 2 directement à partir de l'unité 44 de support. Le récipient 2 passe sans transition de l'unité 44 de support au dispositif 10 d'élévation. L'ouverture 446 de dégagement radial est destinée à faire face au dispositif 10 d'élévation quand l'unité 44 de support supportant le récipient 2 est à l'emplacement bas. Le logement 440 de support est ouvert sur l'ouverture 446 de dégagement radial. L'ouverture 446 de dégagement radial ouvre donc le côté du logement 444 de support le plus éloigné de l'axe 42 de rotation. Les extrémités libres des bras 442 délimitent l'ouverture 446 de dégagement.

Par ailleurs, les moyens de support comprennent avantageusement des organes 448 de positionnement configurés pour pré-positionner le récipient 2 sur l'unité 44 de support dans une position de préhension telle que, lorsque l'unité 44 de support et le récipient 2 sont à l'emplacement bas, le récipient 2 est apte à être entraîné par le dispositif 10 d'élévation, comme cela sera décrit plus en détails ci-après. Les organes 448 de positionnement délimitent par exemple des encoches sensiblement en forme de V, comme illustré sur la figure 4. Les organes 448 de positionnement peuvent avantageusement comprendre une partie 4480 fixe formant un premier côté de l'encoche en V, et une partie 4482 mobile, par exemple en rotation, par rapport à la partie 4480 fixe, entre une position déployée (figure 4) dans laquelle la partie 4482 mobile forme avec la partie fixe l'encoche en forme de V, les branches du V étant les plus resserrées possibles, et une position escamotée (non représentée) dans laquelle la partie 4480 fixe ouvre l'encoche en V, c'est-à-dire éloigne les branches du V, de manière à faciliter l'extraction ou la mise en place du récipient 2. Cela permet, notamment lors d'opérations de maintenance sur les récipients 2, de positionner ceux-ci latéralement, c'est-à-dire selon une translation sensiblement radiale, compte-tenu de la présence de la toiture 50 qui s'étend au-dessus de la structure 40 de support. On notera que la partie 4482 mobile est destinée à être la plus proche du dispositif 10 d'élévation quand l'unité 44 de support et le récipient 2 sont à l'emplacement bas, de manière à ouvrir le V en direction du dispositif 10 d'élévation. Des moyens de rappel, comme un ressort, peuvent être prévus pour maintenir la partie 4482 mobile en position déployée.

Comme visible sur la figure 4, les récipients 2 comprennent deux barres 28 d'appui sensiblement coaxiales, et destinées à prendre appui sur les moyens de support, par exemple sur les bras 442, notamment dans les encoches en V délimitées par les organes 48 de positionnement, pour permettre au récipient 2 de reposer sur l'unité 44 de support. Les deux barres 28 d'appui s'étendant à partir de la paroi 20 latérale. Ces deux barres 28 d'appui sont avantageusement désaxées par rapport au centre de gravité du récipient 2, c'est-à-dire l'axe les reliant n'inclut pas le centre de gravité du récipient, et sont agencées de sorte que le récipient 2 tend à pivoter autour de l'axe formé par les deux barres 28 d'appui coaxiales, en direction de l'axe 42 de rotation central de la structure 40 de support, quand les barres 48 d'appui reposent sur les moyens de support, ces derniers étant configurés pour permettre ce mouvement de pivot autour des barres 28 d'appui. Une butée 29 équipe par ailleurs les récipients 2, cette butée 29 étant destinée à venir en appui contre une 447 surface d'appui des moyens de support pour arrêter le basculement du récipient 2 et immobiliser ce dernier de façon stable sur l'unité 44 de support. La surface 447 d'appui peut être une surface supérieure du bras de traverse 444. La butée 29 peut être réglable, par exemple comprenant une tige filetée permettant d'ajuster sa position vis-à-vis des barres 28 d'appui. La butée 29 contribue à positionner le récipient dans la position de préhension.

Comme illustré sur la figure 3 le dispositif 10 d'élévation comprend une rampe 12 inclinée, qui est de préférence sensiblement rectiligne, et des moyens d'entraînement configurés pour déplacer le récipient 2 en translation le long de cette rampe 12, à partir de l'emplacement bas jusqu'à l'emplacement haut. Ainsi, le dispositif 10 d'élévation permet d'associer un mouvement linéaire de translation après que les récipients 2 aient été déplacés en rotation autour de l'axe 42 de rotation central par le dispositif de distribution rotatif 4. La rampe 12 s'élève ici en diagonale, dans un plan sensiblement vertical incluant l'axe 42 de rotation. La rampe 12 peut comprendre une extrémité basse agencée sous la structure 40 de support, au niveau de l'emplacement bas, et plus précisément sous le logement 440 de support et le récipient 2 quand l'unité 44 de support et le récipient 2 sont à l'emplacement bas.

Les moyens d'entraînement sont avantageusement configurés pour soulever le récipient 2, depuis l'emplacement bas jusqu'à l'emplacement haut, puis pour ramener le récipient 2, depuis l'emplacement haut jusqu'à l'emplacement bas, en posant de nouveau le récipient 2 sur l'unité 44 de support.

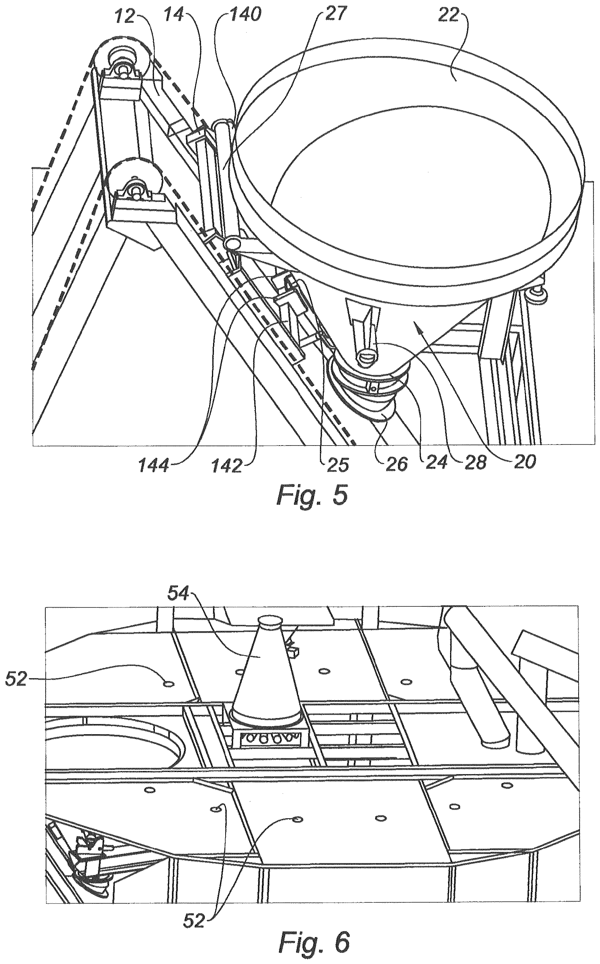

Les moyens d'entraînement comprennent à cet effet un dispositif 14 de préhension, par exemple un chariot de préhension comme illustré sur la figure 5, mobile en translation le long de la rampe 12 inclinée et destiné à entraîner avec lui le récipient 2 en translation le long de la rampe 12 inclinée. Comme le récipient 2 est déjà pré-positionné en position de préhension par les organes 48 de positionnement et la butée 29, dans laquelle une partie de préhension 27 du récipient 2, complémentaire du dispositif 14 de préhension, s'étend sur la trajectoire de ce dernier, le soulèvement du récipient 2 est automatiquement déclenché du fait de la translation du dispositif 14 de préhension depuis le bas de la rampe 12 jusqu'en haut de celle-ci. La rampe 12 inclinée fait office de rail de guidage pour le dispositif 14 de préhension, comme visible sur la figure 5. Par ailleurs, toujours selon l'exemple de la figure 5, le dispositif 10 d'élévation peut comprendre des moyens pour entraîner le dispositif 14 de préhension en translation le long de la rampe 12, comme une chaîne et un moteur.

Le dispositif 14 de préhension comprend avantageusement des moyens de préhension configurés pour coopérer avec la partie 27 de préhension de manière à faire reposer le récipient 2 contre un organe 142 d'appui du dispositif 14 de préhension sous l'effet de la gravité seulement quand le récipient 2 est déplacé le long de la rampe 12 inclinée.

Plus précisément, la partie de préhension 27 du récipient 2 peut être une barre de préhension, s'étendant à un côté du récipient 2 opposé à celui où est située la butée 29, parallèlement aux barres 28 d'appui. La partie de préhension 27 est à proximité de l'ouverture 22 supérieure. Le dispositif 14 de préhension peut comprendre un ou des crochets 140 formant les moyens de préhension et destinés à engager la barre de préhension du récipient 2. Compte-tenu de l'emplacement de la partie de préhension 27, excentrée par rapport au centre de gravité du récipient 2, l'entraînement de celui-ci le long de la rampe 12 par engagement de la barre de préhension dans le ou les crochets 140 tend à provoquer un mouvement de basculement du récipient 2 autour de la barre de préhension, en direction de la butée 29, ce qui permet de plaquer la paroi 20 latérale du récipient contre l'organe 142 d'appui du dispositif 14 de préhension, par exemple une traverse, afin de stabiliser le récipient 2 lors de son élévation. En particulier, l'organe 142 d'appui peut présenter deux flancs 144 délimitant entre eux un espace de réception adapté pour recevoir une portion de tenon 25, de forme complémentaire de l'espace de réception ainsi délimité, et s'étendant depuis la paroi 20 latérale du récipient, afin de stabiliser davantage encore le récipient en empêchant tout mouvement latéral du récipient 2 au cours de son élévation.

Une fois à l'emplacement haut, le récipient 2 peut être déchargé, notamment dans un mélangeur situé sous le récipient 2, précisément sous l'ouverture 24 inférieure, par ouverture de la trappe 26. Le récipient 2 vide est ensuite reposé automatiquement sur l'unité 44 de support par déplacement du dispositif 14 de préhension depuis le haut de la rampe 12 jusqu'au bas de celle-ci.

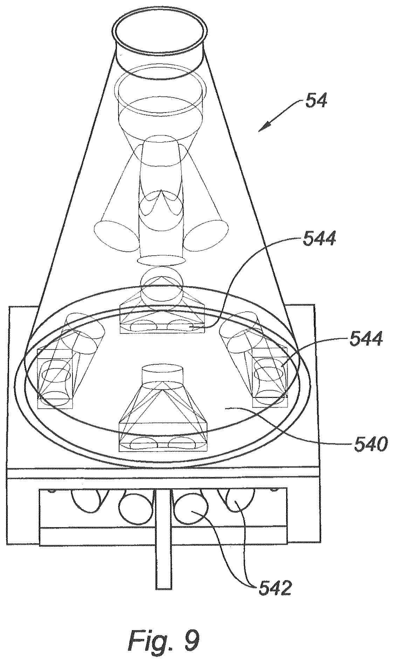

Comme illustré sur la figure 6, le dispositif de distribution rotatif 4 peut avantageusement comprendre une toiture 50 destinée à s'étendre au-dessus de la structure 40 de support et des récipients 2 supportés par la structure 40 de support. Cette toiture 50 peut comprendre une pluralité de trous 52 d'aspiration agencés au-dessus de la trajectoire des unités 44 de support ou récipients 2. Les trous 52 d'aspiration sont donc ici répartis de manière circulaire. L'installation 1 peut en outre comprendre un dispositif 54 d'aspiration sélectif configuré pour aspirer des poussières uniquement au-niveau du ou des trous 52 d'aspiration sous lesquels passe un récipient 2 lorsque la structure 40 de support pivote autour de l'axe 42 de rotation. Ainsi, l'aspiration par le dispositif 54 d'aspiration suit le parcours des récipients 2. Cette sélection peut être mécanique : le dispositif 54 d'aspiration comprend par exemple un plateau 540 pivotant entraîné en rotation simultanément à la structure 40 de support ; le plateau 540 obture certaines des têtes 542 d'aspiration, qui peuvent être agencées en cercle autour de l'axe 42 de rotation, en direction des trous 52 d'aspiration, et comprend des lumières 544 destinées à s'étendre au-dessus de certaines têtes 542 d'aspiration, en l'occurrence celles devant lesquelles passe un récipient 2, pour permettre à ces têtes 542 d'aspiration d'aspirer les poussières au niveau des trous 52 d'aspiration sous lesquels passe ce récipient 2 (figure 9).

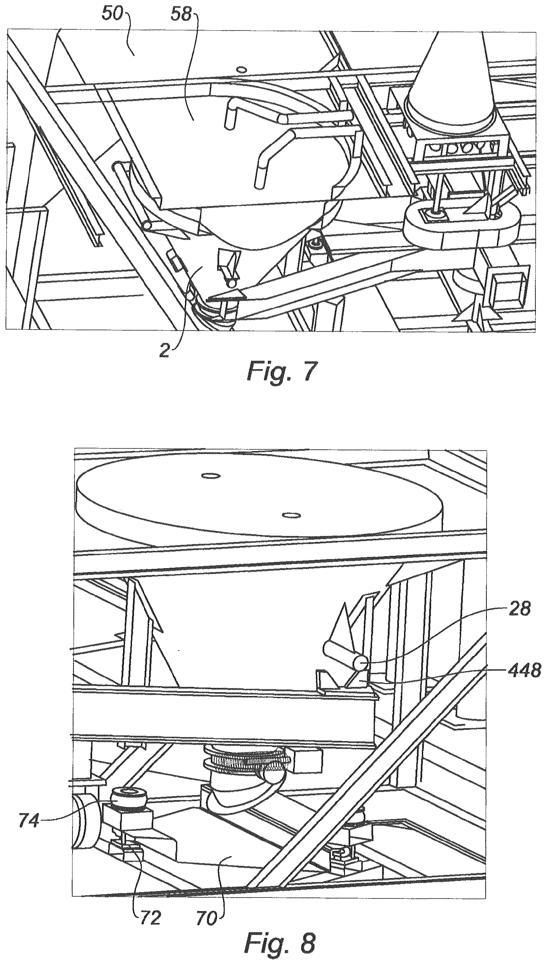

Par ailleurs, comme illustré sur la figure 2, la toiture 50 délimite, en regard du dispositif 10 d'élévation, une ouverture 56 de passage, à travers laquelle peut s'étendre la rampe 12, cette ouverture 56 de passage permettant l'élévation du récipient 2 correspondant depuis l'emplacement bas jusqu'à l'emplacement haut, à travers la toiture 50. Comme visible sur la figure 7, l'installation 1 comprend un capot 58, destiné à reposer sur la toiture 50, en obturant au moins en partie l'ouverture 56 de passage. Le capot 58 est simplement posé sur la toiture 50, et est agencé sur la trajectoire du récipient 2 quand celui-ci est élevé de l'emplacement bas à l'emplacement haut par le dispositif 10 d'élévation. Ainsi, le capot 58 amovible est configuré pour être emporté par le récipient 2 lors de l'élévation de ce dernier, et est dimensionné pour obturer au moins en partie l'ouverture 22 supérieure du récipient 2. Lors du retour du récipient 2 à l'emplacement bas, le capot 58 vient se poser de nouveau sur la toiture 50 en travers de l'ouverture 56 de passage. Le capot 58 est à la fois destiné à coopérer par complémentarité de forme avec la toiture 50 pour être positionné précisément sur celle-ci en travers de l'ouverture 56 de passage, et à coopérer par complémentarité de forme avec les récipients 2, pour être positionné précisément sur ceux-ci, en travers de l'ouverture 22 supérieure.

Comme illustré sur les figures 2 et 8, l'installation 1 peut avantageusement comprendre des moyens de pesage des récipients 2 supportés par le bâti 46. Ces moyens de pesage peuvent être agencés sous la structure 40 de support, de préférence à chaque emplacement de chargement prédéterminé, sous le quand récipient 2 quand l'unité 44 de support est située au ou à l'un de ces emplacements de chargement prédéterminés. Le logement 440 de réception permet de placer la partie basse des récipients 2 en regard des moyens de pesage. Les moyens de pesage peuvent comprendre un plateau 70 de pesée supportée par des pesons 72, et des actionneurs ou vérins 74 souples permettant de soulever le plateau 70 de pesée puis le récipient 2, pour permettre ainsi aux pesons 72 de reprendre la charge du récipient 2 à peser.

Bien entendu, l'invention n'est nullement limitée au mode de réalisation décrit ci-dessus, ce mode de réalisation n'ayant été donné qu'à titre d'exemple. Des modifications sont possibles, notamment du point de vue de la constitution des divers éléments ou par la substitution d'équivalents techniques, sans sortir pour autant du domaine de protection de l'invention.

## Revendications

1. Installation (1) destinée au transfert de récipients (2) pouvant contenir une matière pulvérulente, **caractérisée en ce que** l'installation (1) comprend :
un dispositif de distribution rotatif (4) ayant une structure (40) de support destinée à supporter plusieurs récipients (2) et un axe (42) de rotation autour duquel la structure (40) de support est mobile en rotation, de sorte qu'une rotation de la structure (40) de support d'une fraction de tour prédéterminée autour de l'axe (42) de rotation provoque un déplacement des récipients (2) d'un emplacement prédéterminé à un autre selon une trajectoire en arc-de-cercle autour de l'axe (42) de rotation, et
un dispositif (10) d'élévation configuré pour élever un des récipients (2) parmi la pluralité de récipients (2) depuis un emplacement bas correspondant à l'un desdits emplacements prédéterminés jusqu'à un emplacement haut situé en hauteur par rapport à cet emplacement bas, **caractérisé en ce que** le dispositif (10) d'élévation comprend une rampe (12) inclinée et des moyens d'entraînement configurés pour déplacer le récipient (2) en translation le long de la rampe (12) depuis l'emplacement bas jusqu'à l'emplacement haut, et dans laquelle la structure (40) de support comprend une pluralité d'unités (44) de support ayant chacune des moyens de support configurés pour supporter un des récipients (2), chaque unité (44) de support délimitant une ouverture (446) de dégagement radial permettant aux moyens d'entraînement de déplacer le récipient (2) le long de la rampe (12) directement depuis l'unité (44) de support.

2. Installation (1) selon la revendication 1, dans laquelle la structure (40) de support comprend une pluralité d'unités (44) de support ayant chacune des moyens de support configurés pour supporter un des récipients (2), de sorte que ce récipient (2) repose de manière stable et par gravité sur l'unité (44) de support, et dans laquelle le dispositif (10) d'élévation comprend des moyens d'entraînement configurés pour soulever le récipient (2), depuis l'emplacement bas jusqu'à l'emplacement haut, puis ramener le récipient (2), depuis l'emplacement haut jusqu'à l'emplacement bas, en posant de nouveau le récipient (2) sur l'unité (44) de support.

3. Installation (1) selon la revendication 1 ou la revendication 2, dans laquelle les moyens d'entraînement comprennent un dispositif (14) de préhension mobile en translation le long de la rampe (12) inclinée et destiné à entraîner avec lui le récipient (2) en translation le long de la rampe (12) inclinée, les moyens de support comprenant des organes (448) de positionnement configurés pour pré-positionner le récipient (2) sur l'unité (44) de support dans une position de préhension telle que, lorsque l'unité (44) de support est à l'emplacement bas, le récipient (2) présente une partie (27) de préhension qui s'étend sur la trajectoire du dispositif (14) de préhension.

4. Installation (1) selon la revendication 3, dans laquelle le dispositif (14) de préhension comprend des moyens de préhension configurés pour coopérer avec la partie (27) de préhension de manière à faire reposer le récipient (2) contre un organe (142) d'appui du dispositif (14) de préhension sous l'effet de la gravité quand le récipient (2) est déplacé le long de la rampe (12) inclinée.

5. Installation (1) selon la revendication 3 ou 4, dans laquelle les organes (448) de positionnement délimitent des encoches sensiblement en forme de V, et comprennent une partie (4480) fixe formant un premier côté de l'encoche en V, et une partie (4482) mobile par rapport à la partie (4480) fixe entre une position déployée, dans laquelle la partie (4482) mobile forme avec la partie (4480) fixe l'encoche en forme de V, et une position escamotée dans laquelle la partie (4482) mobile ouvre l'encoche en V.

6. Installation (1) selon l'une des revendications 2 à 5, dans laquelle les récipients (2) comprennent deux barres (28) d'appui coaxiales destinées à reposer sur les moyens de support, les deux barres (28) d'appui étant désaxées par rapport au centre de gravité du récipient (2) de sorte que le récipient (2) tend à pivoter autour des deux barres (28) d'appui coaxiales vers l'axe (42) de rotation central de la structure (40) de support quand les barres (28) d'appui sont supportées par les moyens de support, et dans laquelle chaque récipient (2) comprend une butée (29) destinée à venir en appui contre une surface (447) d'appui des moyens de support pour arrêter le basculement du récipient (2) et immobiliser ce dernier sur les moyens de support.

7. Installation (1) selon l'une des revendications 1 à 6, dans laquelle le dispositif de distribution rotatif (4) comprend une toiture (50) destinée à s'étendre au-dessus de la structure (40) de support et des récipients (2), et dans laquelle la toiture (50) comprend une pluralité de trous (52) d'aspiration agencés pour être au-dessus de la trajectoire des récipients (2), l'installation (1) comprenant un dispositif (54) d'aspiration sélectif configuré pour aspirer uniquement au-niveau du ou des trous (52) d'aspiration sous lesquels passe un récipient (2).

8. Installation (1) selon l'une des revendications 1 à 7, dans laquelle le dispositif de distribution rotatif (4) comprend une toiture (50) destinée à s'étendre au-dessus de la structure (40) de support et des récipients (2), et dans laquelle la toiture (50) délimite, en regard du dispositif (10) d'élévation, une ouverture (56) de passage permettant l'élévation du récipient (2) depuis l'emplacement bas jusqu'à l'emplacement haut à travers la toiture (50), l'installation (1) comprenant un capot (58) amovible posé sur la toiture (50) et obturant au moins en partie ladite ouverture (56), le capot (58) étant configuré pour être entraîné par le récipient (2) en obturant une ouverture (22) supérieure de ce récipient (2) quand celui-ci est élevé de l'emplacement bas à l'emplacement haut, et être posé de nouveau sur la toiture (50) en travers de l'ouverture (56) de passage du fait du retour du récipient (2) de l'emplacement haut jusqu'à l'emplacement bas.

9. Installation (1) selon l'une des revendications 1 à 8, dans laquelle l'installation (1) comprend des moyens de pesage adaptés pour peser au moins un des récipients (2) supportés par la structure (40) de support.

## Patentansprüche

1. Anordnung (1) zum Transfer von Behältern (2), die einen pulverförmigen Stoff enthalten können, **dadurch gekennzeichnet, dass** die Anordnung (1) folgende Elemente aufweist:
eine Drehverteilervorrichtung (4), die eine Tragstruktur (40) umfasst, welche zum Tragen mehrerer Behälter (2) bestimmt ist, sowie eine Drehachse (42), um die sich die Tragstruktur (40) dreht, so dass eine Drehung der Tragstruktur (40) um einen vordefinierten Bruchteil einer Umdrehung um die Drehachse (42) eine Bewegung der Behälter (2) auf einer kreisbogenförmigen Bewegungsbahn um die Drehachse (42) von einer vordefinierten Position zu einer nächsten herbeiführt, und
eine Hochfördervorrichtung (10), die so ausgelegt ist, dass sie einen der mehreren Behälter (2) von einer unteren Position, die einer der besagten vordefinierten Positionen entspricht, zu einer oberen Position, die sich in Bezug auf die untere Position höher gelegen befindet, hochfördert, **dadurch gekennzeichnet, dass** die Hochfördervorrichtung (10) eine ansteigende Rampe (12) und Antriebselemente aufweist, die so ausgelegt sind, dass sie den Behälter (2) in einer Translationsbewegung entlang der Rampe (12) von der unteren Position in die obere Position bewegen, und bei der die Tragstruktur (40) mehrere Tragelemente (44) aufweist, die jeweils Tragvorrichtungen umfassen, welche so ausgelegt sind, dass sie einen der Behälter (2) tragen können, wobei jedes Tragelement (44) eine radiale Durchlassöffnung (446) begrenzt, die es den Antriebsmitteln ermöglicht, den Behälter (2) direkt vom Tragelement (44) entlang der Rampe (12) hochzufördern.

2. Anordnung (1) gemäß Anspruch 1, in der die Tragstruktur (40) mehrere Tragelemente (44) umfasst, die jeweils Tragvorrichtungen aufweisen, welche so ausgelegt sind, dass sie einen der Behälter (2) in der Weise tragen, dass dieser Behälter (2) stabil und per Schwerkraft auf dem Tragelement (44) positioniert ist; und in der die Hochfördervorrichtung (10) Antriebsmittel aufweist, die so ausgelegt sind, dass sie den Behälter (2) von der unteren Position in die obere Position hochfördern, dann den Behälter (2) von der oberen Position in die untere Position zurückbewegen und ihn (2) wieder auf dem Tragelement (44) absetzen.

3. Anordnung (1) gemäß Anspruch 1 oder Anspruch 2, in der die Antriebsmittel eine in einer Translationsbewegung entlang der Rampe (12) bewegliche Greifvorrichtung (14) aufweisen, die dazu bestimmt ist, den Behälter (2) in einer Translationsbewegung entlang der ansteigenden Rampe (12) mit sich zu führen, wobei die Tragvorrichtungen Positionierorgane (448) aufweisen, die so ausgelegt sind, dass der Behälter (2) auf dem Tragelement (44) derart in einer Greifposition vorpositioniert wird, dass ein zum Greifen vorgesehener Teil (27) des Behälters (2), wenn sich das Tragelement (44) in der unteren Position befindet, so ausgerichtet ist, dass er (27) sich über die Bewegungsbahn der Greifvorrichtung (14) erstreckt.

4. Anordnung (1) gemäß Anspruch 3, in der die Greifvorrichtung (14) Greifelemente aufweist, die so ausgelegt sind, dass sie mit dem zum Greifen vorgesehenen Teil (27) zusammenwirken, so dass sich der Behälter (2) ausschließlich unter Einwirkung der Schwerkraft auf ein Stützelement (142) der Greifvorrichtung (14) stützt, während der Behälter (2) entlang der ansteigenden Rampe (12) bewegt wird.

5. Anordnung (1) gemäß Anspruch 3 oder 4, in der die Positionierorgane (448) im Wesentlichen V-förmige Aufnahmebuchten begrenzen und einen festen Teil (4480) umfassen, der eine erste Seite der V-förmigen Aufnahmebucht bildet, und einen in Bezug auf den festen Teil 4480 beweglichen Teil (4482), der zwischen einer ausgefahrenen Stellung, in der der bewegliche Teil (4482) mit dem festen Teil (4480) die V-förmige Aufnahmebucht bildet, und einer eingefahrenen Stellung, in der der bewegliche Teil (4482) die V-förmige Aufnahmebucht öffnet, beweglich ist.

6. Anordnung (1) gemäß einem der Ansprüche 2 bis 5, in der die Behälter (2) zwei koaxiale Auflagestangen (28) aufweisen, die dazu bestimmt sind, auf den Tragvorrichtungen aufzuliegen, wobei die beiden Auflagestangen (28) in Bezug auf den Schwerpunkt des Behälters (2) verschoben sind, damit der Behälter (2) dazu neigt, um die beiden koaxialen Auflagestangen (28) zur mittleren Drehachse (42) der Tragstruktur (40) hin zu schwenken, wenn die Auflagestangen (28) von den Tragvorrichtungen getragen werden, und in der jeder Behälter (2) einen Anschlag (29) aufweist, der sich gegen eine Auflagefläche (447) der Tragvorrichtungen stützt, um das Kippen des Behälters (2) zu unterbinden und letzteren positionssicher auf den Tragvorrichtungen zu positionieren.

7. Anordnung (1) gemäß einem der Ansprüche 1 bis 6, in der die Drehverteilervorrichtung (4) eine Überdachung (50) aufweist, die sich über die Tragstruktur (40) und die Behälter (2) erstreckt, und in der die Überdachung (50) mehrere Absauglöcher (52) aufweist, die so angeordnet sind, dass sie sich über der Bewegungsbahn der Behälter (2) befinden, wobei die Anordnung (1) eine selektive Absaugvorrichtung (54) aufweist, die so ausgelegt ist, dass sie nur über dem bzw. den Absauglöchern (52) absaugt, unter denen ein Behälter (2) vorbeigeführt wird.

8. Anordnung (1) gemäß einem der Ansprüche 1 bis 7, in der die Drehverteilervorrichtung (4) eine Überdachung (50) aufweist, die sich über die Tragstruktur (40) und die Behälter (2) erstreckt, und in der die Überdachung (50) in Bezug auf die Hochfördervorrichtung (10) eine Durchlassöffnung (56) begrenzt, die das Hochfördern des Behälters (2) von der unteren Position in die obere Position durch die Überdachung (50) hindurch ermöglicht, wobei die Anordnung (1) eine abnehmbare Abdeckung (58) aufweist, die auf der Überdachung (50) aufliegt und mindestens teilweise die besagte Öffnung (56) bedeckt, wobei die Abdeckung (58) so ausgelegt ist, dass sie vom Behälter (2) mitgenommen wird und auf diese Weise eine obere Öffnung (22) des Behälters (2) verschließt, wenn dieser von der unteren Position in die obere Position hochgefördert wird, und zum Abdecken der Durchlassöffnung (56) wieder auf der Überdachung (50) abgelegt wird, wenn der Behälter (2) von der oberen Position zur unteren Position zurückkehrt.

9. Anordnung (1) gemäß einem der Ansprüche 1 bis 8, in der die Anordnung (1) geeignete Wiegemittel aufweist, um mindestens einen der von der Tragstruktur (40) getragenen Behälter (2) zu wiegen.

## Claims

1. An installation (1) designed to transfer receptacles (2) that may contain a powdery material, said installation (1) being **characterized in that** it comprises:
a rotary distributor device (4) having a support structure (40) designed to support a plurality of receptacles (2) and a rotation shaft (42) embodying an axis of rotation about which the support structure (40) is mounted to move in rotation, so that the support structure (40) turning through a predetermined fraction of a turn about the axis of rotation embodied by the rotation shaft (42) causes the receptacles (2) to move from one predetermined location to another along a circularly arcuate path about the axis of rotation embodied by the rotation shaft (42); and
an elevator device (10) configured to raise one of the receptacles (2) among the plurality of receptacles (2) from a low location corresponding to one of said predetermined locations to a high location situated at a height relative to said low location; said installation being **characterized in that** the elevator device (10) comprises a ramp (12) and drive means configured to move the receptacle (2) in translation along the ramp (12) from the low location to the high location, and wherein the support structure (40) comprises a plurality of support units (44) each having support means configured to support a respective one of the receptacles (2), each support unit (44) defining a radial clearance opening (446) enabling the drive means to move the receptacle (2) along the ramp (12) directly from the support unit (44).

2. An installation (1) according to claim 1, wherein the support structure (40) comprises a plurality of support units (44) each having support means configured to support a respective one of the receptacles (2), so that the receptacle (2) rests stably and by gravity on the support unit (44), and wherein the elevator device (10) includes drive means configured to raise the receptacle (2), from the low location to the high location, and then to return the receptacle (2), from the high location to the low location, by resting the receptacle (2) on the support unit (44) again.

3. An installation (1) according to claim 1 or claim 2, wherein the drive means comprise a pickup device (14) mounted to move in translation along the ramp (12) and designed to drive the receptacle (2) with it in translation along the ramp (12), the support means including positioning members (448) configured to pre-position the receptacle (2) on the support unit (44) in a pickup position such that, when the support unit (44) is at the low location, the receptacle (2) has a pickup portion (27) that extends in the path of the pickup device (14).

4. An installation (1) according to claim 3, wherein the pickup device (14) comprises pickup means configured to co-operate with the pickup portion (27) in such a manner as to cause the receptacle (2) to rest against a bearing member (142) of the pickup device (14) under the effect of gravity while the receptacle (2) is being moved along the ramp (12).

5. An installation (1) according to claim 3 or claim 4, wherein the positioning members (448) define substantially V-shaped notches, and each of them comprises a stationary portion (4480) forming a first side of the V-shaped notch, and a moving portion (4482) mounted to move relative to the stationary portion (4480), between a deployed position in which the moving portion (4482) co-operates with the stationary portion (4480) to form the V-shaped notch, and a retracted position in which the moving portion (4482) opens the V-shaped notch.

6. An installation (1) according to any one of claims 2 to 5, wherein each of the receptacles (2) is provided with two bearing bars (28) that are in alignment along a common axis and that are designed to rest on the support means, the two bearing bars (28) being offset relative to the centre of gravity of the receptacle (2) so that the receptacle (2) tends to pivot about the two aligned bearing bars (28) towards the central axis of rotation embodied by the rotation shaft (42) of the support structure (40) when the bearing bars (28) are supported by the support means, and wherein each receptacle (2) is provided with an abutment (29) designed to come to bear against a bearing surface (447) of the support means for stopping the receptacle (2) from tipping and for holding it stationary on the support means.

7. An installation (1) according to any one of claims 1 to 6, wherein the rotary distributor device (4) is provided with a roof (50) designed to extend above the support structure (40) and above the receptacles (2), and wherein the roof (50) is provided with a plurality of suction holes (52) arranged to be above the path of the receptacles (2), the installation (1) further comprising a selective suction device (54) configured to suck only through the suction hole(s) (52) under which a receptacle (2) is passing.

8. An installation (1) according to any one of claims 1 to 7, wherein the rotary distributor device (4) is provided with a roof (50) designed to extend above the support structure (40) and above the receptacles (2), and wherein, facing the elevator device (10), the roof (50) defines a passage opening (56) enabling the receptacle (2) to be raised from the low location to the high location, through the roof (50), the installation (1) further comprising a removable cover (58) placed so that it rests on the roof (50) and closes off said opening (56) at least in part, the cover (58) being configured to be removed by the receptacle (2) while closing a top opening (22) of the receptacle (2) while said receptacle is being raised from the low location to the high location, and to be placed to rest on the roof (50) again, across the passage opening (56) by the receptacle (2) returning from the high location to the low location.

9. An installation (1) according to any one of claims 1 to 8, wherein the installation (1) further comprises weighing means adapted to weigh at least one of the receptacles (2) supported by the support structure (40).
